Europäisches Patentamt

European Patent Office

Office européen des brevets

(11) Publication number: **0 448 097 A2**

# (12) EUROPEAN PATENT APPLICATION

(21) Application number: 91104435.2

(22) Date of filing: 21.03.91

(51) Int. Cl.5: **G06F 5/01**

(30) Priority: 22.03.90 JP 72718/90

(43) Date of publication of application:
25.09.91 Bulletin 91/39

(84) Designated Contracting States:
**BE DE FR GB NL SE**

(71) Applicant: **NEC CORPORATION**
**7-1, Shiba 5-chome Minato-ku**
**Tokyo 108-01(JP)**

(72) Inventor: **Nakamura, Toshihiko**
**c/o NEC Koufu, Ltd., 1088-3, Otsumachi**
**Koufu-shi, Yamanashi(JP)**

(74) Representative: **Vossius & Partner**
**Siebertstrasse 4 P.O. Box 86 07 67**
**W-8000 München 80(DE)**

(54) **Arithmetic shift circuit.**

(57) An arithmetic shift circuit includes a register, a first selecting means, a logic shifter, and a second selecting means. The register receives and stores an operand including a sign portion, and a shift amount. The first selecting means selectively outputs the operand and an inverted value thereof in accordance with a value of the sign portion stored in the register. The logic shifter performs a logic shift-right operation of an output from the first selecting means in accordance with the shift amount stored in the register. The second selecting means selectively outputs an output from the shift means and an inverted value thereof in accordance with the value of the sign portion stored in the register.

FIG.1

EP 0 448 097 A2

The present invention relates to an arithmetic shift circuit and, more particularly, to an arithmetic shift circuit for signed fixed-point binary numbers represented by twos complements.

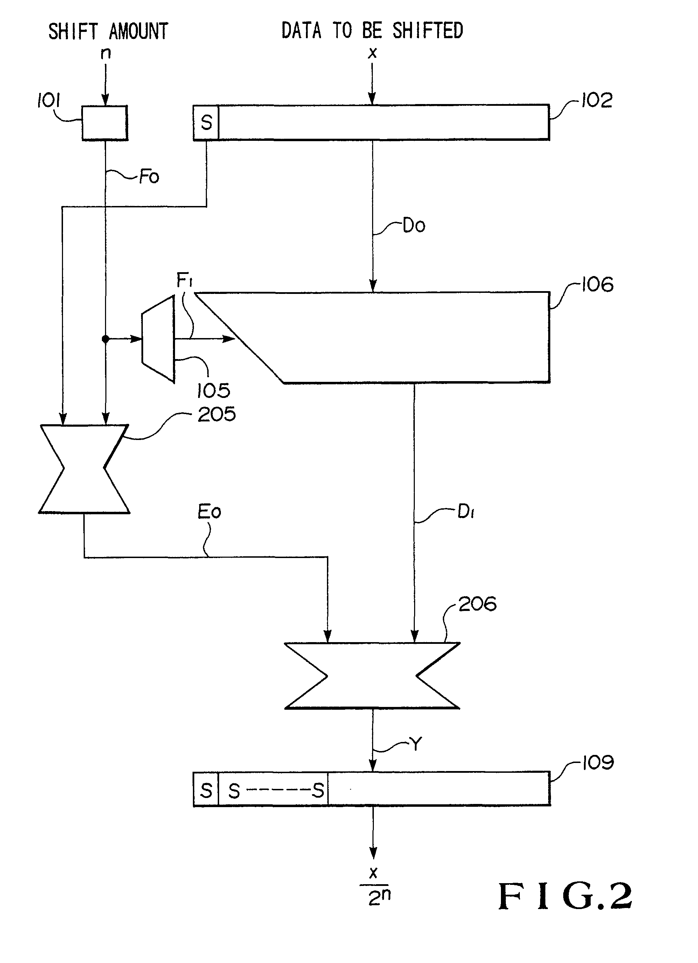

A conventional arithmetic shift circuit of this type is designed to generate a sign extension portion per bit of an input operand in accordance with the sign portion of the input operand and a shift amount. This conventional circuit will be described in detail below with reference to Fig. 2.

Fig. 2 shows a circuit for receiving 8-bit signed fixed-point data $X = [X0, X1, X2, X3, X4, X5, X6, X7]$ and performing an arithmetic shift-right operation in accordance with a 3-bit shift amount $n = [a0, a1, a2]$. Note that X0 is a sign bit.

Referring to Fig. 2, the shift amount $n$ and the data X to be shifted are respectively stored in registers 101 and 102. A logic shifter 106 receives an output D0 from the register 102, performs a logic shift-right operation in accordance with a decoded signal F1 obtained by decoding an output F0 from the register 101 using a decoder 105, and outputs the resulting data.

A sign extension portion generating means 205 generates a sign extension portion of an arithmetic shift result per bit of the target data X in accordance with the sign bit X0 of the target data X and a shift amount. This operation will be described in more detail below.

Assume that the sign of the target data X, i.e., an input operand, is negative and is represented by "1", and that an arithmetic shift result is represented by $Y = [y(0), y(1), y(2), y(3), y(4), y(5), y(6), y(7)]$.

In this case, since a sign extension portion E0(1) corresponding to y(1) must be set to be "1", provided that the input data is negative and the shift amount is 1 or more, the sign extension portion generating means 205 inevitably includes a circuit represented by a logic expression $E0(1) = X0 * (a0 + a1 + a2)$. Similarly, since sign extension portions E0(2), E0(3), ..., E0(7) corresponding to the second bit to the seventh bit, the sign extension portion generating means 205 also includes circuits respectively represented by the following logic expressions:

$$E0(2) = X0 * (a0 + a1)$$
$$E0(3) = X0 * (\overline{a0} * a1 * a2 + a0)$$
$$E0(4) = X0 * a0$$
$$E0(5) = X0 * (a0 * \overline{a1} * a2 + a0 * a1)$$
$$E0(6) = X0 * (a0 * a1)$$
$$E0(7) = X0 * a0 * a1 * a2$$

In addition, since the sign of the input operand is held in the MSB E0(0) as a sign extension portion, a logic expression $E0(0) = X0$ is obtained.

That is, the sign extension portion generating means 205 includes circuits corresponding to the respective logic expressions so as to set a proper sign regardless of the type of shift operation.

If, therefore, the respective bits of the output from the logic shifter 106 are represented by $D1 = [d1(0), d1(1), d1(2), d1(3), d1(4), d1(5), d1(6), d1(7)]$, each bit of the arithmetic shift result Y is represented by a logic expression $y(i) = d1(i) + E0(i)$ $(i = 0, 1, ..., 7)$. This operation is realized by a combining means 206, and the arithmetic shift result Y is stored in the register 109. As a result, $X/2^n$ is retained in the register 109.

The above-described conventional arithmetic shift circuit, however, is designed to generate a sign extension portion per bit in accordance with a shift amount. For this reason, if an input operand has a long bit length, a large amount of hardware is required for the sign extension portion generating means.

Furthermore, if the sign extension portion generating means is realized by an LSI or the like, the number of gates in the sign extension generating means varies, and the delay times of the respective data paths vary. As a result, the maximum delay time is undesirably increased.

Summary of the invention

It is a principal object of the present invention to provide an arithmetic shift circuit which can be realized by a small amount of hardware.

It is another object of the present invention to provide an optimal arithmetic shift circuit for LSI.

It is still another object of the present invention to provide an arithmetic shift circuit which has a uniform data delay time and can prevent an increase in maximum delay time.

It is still another object of the present invention to provide an arithmetic shift circuit which allows easy circuit design.

In order to achieve the above objects, according to the present invention, there is provided an arithmetic shift circuit comprising a register for receiving and storing an operand including a sign portion, and a shift amount, first selecting means for selectively outputting the operand and an inverted value thereof in accordance with a value of the sign portion stored in the register, shift means for performing a logic shift-right operation of an output from the first selecting means in accordance with the shift amount stored in the register, and second selecting means for selectively outputting an output from the shift means and an inverted value thereof in accordance with the value of the sign portion stored in the register.

Brief Description of the Drawings

Fig. 1 is a block diagram showing an arrangement of an arithmetic shift circuit according to an embodiment of the present invention; and
Fig. 2 is a block diagram showing an arrangement of a conventional arithmetic shift circuit.

Description of the Preferred Embodiment

The present invention will be described below with reference to the accompanying drawings.

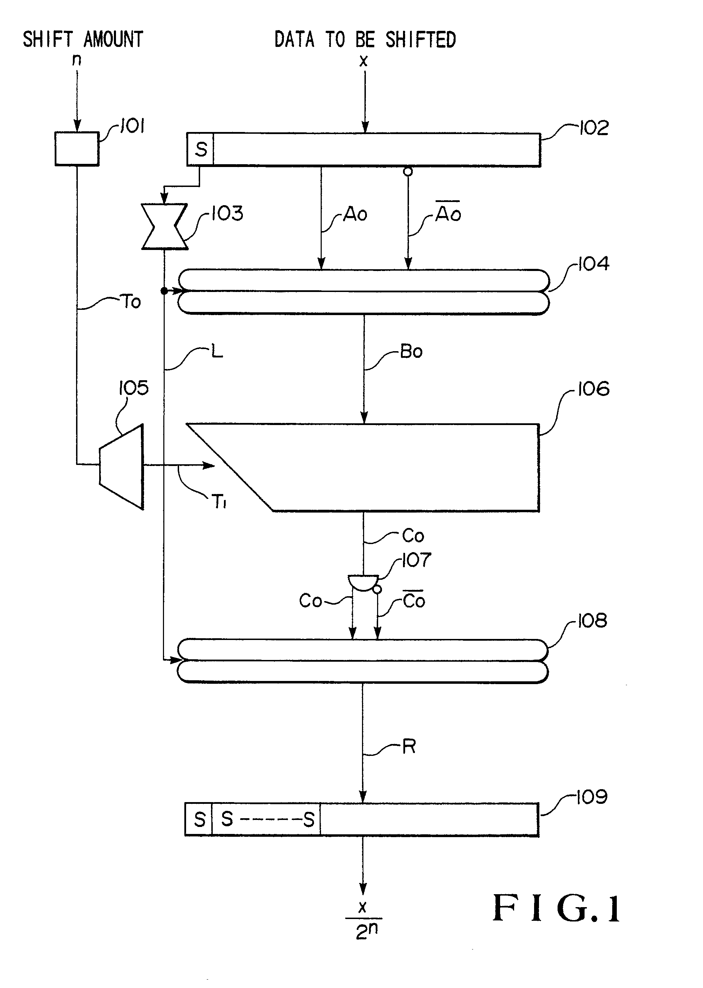

Fig. 1 shows an arrangement of an arithmetic shift circuit according to an embodiment of the present invention. The same reference numerals in Fig. 1 denote the same parts as in Fig. 2. In this embodiment, a shift operation of 8-bit signed fixed-point data $X = [X0, X1, X2, X3, X4, X5, X6, X7]$ identical to the data used in the prior art will be described below. Note that two selecting means are arranged in place of the sign extension portion generating means.

A shift amount n and data X to be shifted are stored in registers 101 and 102, respectively. A selecting means 104 then receives a positive output and a negative output (inverted value), i.e., $A0 = [X0, X1, X2, X3, X4, X5, X6, X7]$ and $\overline{A0} = [\overline{X0}, \overline{X1}, \overline{X2}, \overline{X3}, \overline{X4}, \overline{X5}, \overline{X6}, \overline{X7}]$, from the register 102. In response to a selection signal L output from a selection signal generating means 103, the selecting means 104 selects and outputs A0, provided that a positive value is set in the register 102. If a negative value is set in the register 102, the selecting means 104 selects and outputs $\overline{A0}$. In this embodiment, since the value in the register 102 is negative, $B0 = [\overline{X0}, \overline{X1}, \overline{X2}, \overline{X3}, \overline{X4}, \overline{X5}, \overline{X6}, \overline{X7}]$.

A logic shifter 106 receives the output B0 from the selecting means 104, performs a logic shift-right operation in accordance with a decoded signal T1 obtained by decoding a value T0 from the register 101 by using a decoder 105, and outputs the resulting value as C0. In this embodiment, if the shift amount $n = 3$, the output B0 as an input is logically shifted to the right by 3 bits to obtain $C0 = [0, 0, 0, \overline{X0}, \overline{X1}, \overline{X2}, \overline{X3}, \overline{X4}]$.

A selecting means 108 receives a signal $C0 = [0, 0, 0, \overline{X0}, \overline{X1}, \overline{X2}, \overline{X3}, \overline{X4}]$ and a signal $\overline{C0} = [1, 1, 1, X0, X1, X2, X3, X4]$ obtained by processing the output from the logic shifter 106 by using an inverter gate 107. In response to the selection signal L output from the selection signal generating means 103, the selecting means 108 selects and outputs C0, provided that a positive value ("0") is set in the register 102. If a negative value ("1") is set in the register 102, the selecting means 108 selects and outputs $\overline{C0}$. In this embodiment, since it is assumed that the value in the register 102 is negative, the selecting means 108 outputs an output $R = [1, 1, 1, X0, X1, X2, X3, X4]$ as an arithmetic shift result.

The register 109 stores and holds this arithmetic shift result R. As a result, $X/2^n$ is held in the register 109.

In this embodiment, the shift amount n is set to be 3 bits, and the target data X has 8 bits. However, even if they are increased in bit number, the amount of hardware need not be increased.

It is apparent that the present invention is not limited to binary numbers, but similar arithmetic circuits can be designed for decimal numbers, hexadecimal number, and the like.

As has been described above, according to the present invention, selecting circuits are arranged in place of an arrangement for generating a sign extension portion per bit in accordance with the sign of an input operand and a shift amount. Therefore, an arithmetic shift circuit for processing data having a long bit length can be realized by a small amount of hardware. In addition, since the number of logic gates of each data path can be made uniform, a uniform data delay time can be set.

Moreover, since a logic circuit need not be arranged per bit, circuit design is facilitated.

**Claims**

1.  An arithmetic shift circuit comprising:
    a register (101, 102) for receiving and storing an operand including a sign portion, and a shift amount;
    first selecting means (104) for selectively outputting the operand (A0) and an inverted value ($\overline{A0}$) thereof in accordance with a value of the sign portion stored in said register;
    shift means (106) for performing a logic shift-right operation of an output from said first selecting means in accordance with the shift amount stored in said register; and
    second selecting means (108) for selectively outputting an output from said shift means and an inverted value thereof in accordance with the value of the sign portion stored in said register.

2.  A circuit according to claim 1, wherein said register comprises a pair of registers for respectively storing the operand including the sign portion and the shift amount.

3.  A circuit according to claim 1 or 2, further comprising selection signal generating means (103) for providing a selection signal to said first and second selecting means in accordance with the value of the sign portion stored in said register.

SHIFT AMOUNT

$n$

DATA TO BE SHIFTED

$x$

101

102

S

103

$Ao$

$\overline{Ao}$

104

$To$

105

$L$

$Bo$

106

$Ti$

$Co$

107

$Co$

$\overline{Co}$

108

$R$

109

S │ S ----- S

$\dfrac{x}{2^{n}}$

# F I G.1

SHIFT AMOUNT

$n$

DATA TO BE SHIFTED

$x$

101

102

S

$F_0$

$D_0$

106

$F_1$

105
205

$E_0$

$D_1$

206

$Y$

109

S | S ----- S |

$\dfrac{x}{2^n}$

**F I G.2**